# EUROPÄISCHE PATENTSCHRIFT

(11) **EP 1 618 153 B1**
(45) Veröffentlichungstag und Bekanntmachung des Hinweises auf die Patenterteilung: **26.07.2006**
(21) Anmeldenummer: 04726447.8
(22) Anmeldetag: 08.04.2004
(51) Int. Cl.: C08L 83/16, C09D 183/16

(54) **VERWENDUNG VON POLYSILAZAN ZUR HERSTELLUNG VON HYDROPHOB- UND OLEOPHOBMODIFIZIERTEN OBERFLÄCHEN**
USE OF POLYSILAZANE FOR THE PRODUCTION OF HYDROPHOBICALLY AND OLEOPHOBICALLY MODIFIED SURFACES
UTILISATION DE POLYSILAZANE DANS LA PRODUCTION DE SURFACES RENDUES HYDROPHOBES ET OLEOPHOBES

(30) Priorität: 22.04.2003 DE 10318234
(43) Veröffentlichungstag der Anmeldung: 25.01.2006
(73) Patentinhaber: Clariant Produkte (Deutschland) GmbH, 65929 Frankfurt am Main (DE)
(72) Erfinder: FALK, Uwe, 63486 Bruchköbel (DE); AHRENS, Hendrik, 65931 Frankfurt am Main (DE)
(86) Internationale Anmeldenummer: PCT/EP2004/003754
(87) Internationale Veröffentlichungsnummer: WO 2004/094531

(56) Entgegenhaltungen:
- EP-A- 0 825 231
- EP-A- 1 398 359
- WO-A-20/04039904

## Beschreibung

Die vorliegende Erfindung betrifft ein Verfahren zur Herstellung von hydrophob- und oleophobmodifizierten Oberflächen mittels Polysilazan als grundierender Beschichtung für ein anschließendes Auftragen von fluorhaltigen Komponenten.

Auf hydrophob- und oleophobmodifizierten Oberflächen können öl- und wasserlösliche Verschmutzungen schlecht haften und lassen sich leicht durch Wasser und milde Reinigungsmittel entfernen. Weiterhin bildet Wasser auf hydrophob- und oleophobmodifizierten Oberflächen Tropfen mit großen Kontaktwinkeln, die abperlen und keine Kalkflecken zurücklassen. In jüngster Zeit werden derartige Beschichtungssysteme mit Easy-to-clean-Effekt auch kommerziell genutzt.

Easy-to-Clean-Beschichtungen sind üblicherweise nicht selbstreinigend, sondern vermindern das Anhaften von Schmutz und erleichtern die Reinigung der Oberfläche. Sie tragen zur Schonung der Umwelt bei, da auf aggressive Reinigungsmittel verzichtet werden kann und statt dessen milde und neutrale Reinigungsmittel zum Einsatz kommen können. Allgemein hat sich die Messung des Kontaktwinkels als Maß für den Easy-to-clean-Effekt durchgesetzt. Je höher der Kontaktwinkel eines Wassertropfens gegenüber die Oberfläche ist, desto größer ist die Abperlwirkung von Wassertropfen und um so geringer ist die Bildung von Kalkflecken.

US-5 997 943 beschreibt die Verwendung von Fluorsilanen (fluorhaltige Alkoxysilane) auf Glas in Mischungen mit organischen Lösemitteln, Säuren und Wasser. Die beschriebenen Fluorsilane werden mit anderen Organosilanen gemischt und in geeigneten Lösemitteln gelöst. Durch die Zugabe von Säuren wie Essigsäure oder Schwefelsäure wird die Hydrolyse der Silane aktiviert. Sobald diese Lösung auf die silikatische Oberfläche gebracht wird, reagieren die Silane mit der Oberfläche und werden kovalent gebunden. Durch diese Beschichtung erhöht sich der Kontaktwinkel der Wassertropfen auf der Glasoberfläche von üblicherweise 50 - 60° auf 100 -110°. Typische Fluorsilane sind beispielsweise C₆F₁₃-Alkylethyltriethoxysilan, C₈F₁₇-Alkylethyltriethoxysilan, C₁₀F₂₁₋Alkylethyltriethoxysilan und C₁₂F₂₅-Alkylethyltriethoxysilan und die entsprechenden Methoxy-, Propoxy-, Butoxy- und Methoxyethoxy-, Methoxydiethoxy- und Methoxytriethoxyverbindungen.

Die Perfluoralkylgruppen erhöhen den Kontaktwinkel von Wasser und Kohlenwasserstoffen auf der beschichteten Oberfläche und vermindern das Anhaften von organischen und anorganischen Verunreinigungen, beispielsweise von Fetten, Kalk und Kalkseifen. Fluorsilane eignen sich als Easy-to-Clean-Beschichtungsmittel auf silikatischen Oberflächen.

EP-A-0 846 715 beschreibt die Herstellung von fluorhaltigen Kondensaten aus Perfluoralkylethyltrialkoxysilanen unter Verwendung von organischen Säuren als Hydrolysekatalysator. In dieser Offenlegungsschrift werden fluorhaltige Kondensate durch teilweise Kondensation von Perfluoralkylethyltrialkoxysilanen hergestellt. Dazu werden die oben beschriebenen Fluorsilane und weitere Organosilane mit einer unter stöchiometrischen Menge Wasser durch Ansäuern mit Essigsäure, Schwefelsäure oder Salzsäure zur Hydrolyse gebracht und es ergeben sich fluorhaltige Kondensate, die kolloiddispers in einem Lösemittel, beispielsweise Ethanol oder Isopropanol gelöst sind. Fluorhaltige Kondensate lassen sich ebenfalls zur Beschichtung von silikatischen Oberflächen einsetzen. Sobald das Lösemittel (Ethanol, Isopropanol) verdunstet, reagieren die fluorhaltigen Kondensate mit der Oberfläche und bilden kovalente Bindungen. Die fluorhaltigen Kondensate eignen sich für Easy-to-Clean-Beschichtungen und zeigen eine höhere Lagerbeständigkeit gegenüber Lösungen von Fluorsilanen sowie eine höhere Scheuer- und Waschbeständigkeit der Beschichtung.

EP-A-0 846 716 beschreibt die Kombination von Fluorsilanen mit anderen Organosilanen zur Herstellung von Organopolysiloxanen in Lösemittelgemischen aus Wasser und Alkoholen.

Werden silikatische Oberflächen wie Glas und Keramik oder Oberflächen aus Metalloxiden mit Fluorsilanen oder fluorhaltigen Kondensaten beschichtet, so reagieren diese mit den Oxiden der Oberfläche und werden kovalent gebunden. Aufgrund der chemischen Bindung zwischen dem Substrat und dem Fluorsilan oder fluorhaltigen Kondensat werden die hydrophoben und oleophoben fluorhaltigen Substituenten dauerhaft auf der Oberfläche fixiert, und ihre Wirkungen bleiben erhalten.

Nachteilig ist, dass Fluorsilane oder fluorhaltige Kondensate nicht mit Oberflächen reagieren, die keine Oxid- oder Hydroxidgruppen enthalten. Beispielsweise lassen sich Metalle, Kunststoffe, Lacke und Harze mit Hilfe der Fluorsilane oder fluorhaltigen Kondensate nicht mit einem permanenten hydrophoben und oleophoben Effekt ausrüsten.

Ein weiterer Nachteil ist die relativ kleine Teilchengröße der Fluorsilane oder fluorhaltigen Kondensate. Auf stark saugenden Oberflächen oder Oberflächen mit großen Poren diffundieren die Fluorsilane oder fluorhaltigen Kondensate in das Substrat, ohne die Oberfläche ausreichend mit einem "Easy-to-clean-Effekt" zu belegen.

Der vorliegenden Erfindung lag die Aufgabe zugrunde, ein Verfahren zu entwickeln, mit dem es möglich ist, Metalle, Kunststoffe, Lacke, Harze und poröse Oberflächen mit einem permanenten hydrophoben und oleophoben Effekt zu versehen.

Überraschenderweise wurde nun gefunden, dass man poröse Oberflächen durch Vorbehandlung mit Polysilazanlösungen mit einem permanenten hydrophoben und oleophoben Effekt versehen kann.

Gegenstand der Erfindung ist die Verwendung einer Polysilazanlösung, die ein Polysilazan der Formel 1 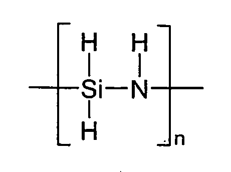 worin n so bemessen ist, dass das Polysilazan ein zahlenmittleres Molekulargewicht von 150 bis 150.000 g/mol aufweist, sowie ein Lösemittel und einen Katalysator enthält, als Grundierung für die Beschichtung einer Oberfläche mit Fluorsilanen oder fluorhaltigen Kondensaten.

Ein weiterer Gegenstand der Erfindung ist ein Verfahren zur Herstellung einer mit fluorsilanen oder fluorhaltigen Kondensaten beschichteten Oberfläche, indem man die unbeschichtete Oberfläche in einem ersten Schritt mit einer Zusammensetzung in Kontakt bringt, welche ein Polysilazan der Formel 1, ein Lösemittel und einen Katalysator enthält, und die im ersten Schritt erhaltene Oberfläche dann in einem zweiten Schritt mit Fluorsilanen oder fluorhaltigen Kondensaten in Kontakt bringt. Vorzugsweise lässt man nach dem ersten Schritt das Lösemittel verdunsten.

Ein weiterer Gegenstand der Erfindung ist eine beschichtete Oberfläche, erhältlich nach dem vorstehend beschriebenen Verfahren.

Das Molekulargewicht des Polysilazans liegt vorzugsweise zwischen 300 und 10.000, insbesondere zwischen 600 und 3000 g/mol.

Die Polysilazanlösung enthält vorzugsweise 0,001 bis 35, insbesondere 0,5 bis 5 und speziell 1 bis 3 Gew.-% des Polysilazans, 0,00004 bis 3,5, insbesondere 0,02 bis 0,5 und speziell 0,04 bis 0,3 Gew.-% des Katalysators und Lösemittel ad 100 Gew.-%, bezogen auf das Gewicht der Lösung.

Katalysatoren ermöglichen die Umwandlung von Polysilazan in Siliziumdioxid bei niedrigen Temperaturen, insbesondere bei Raumtemperatur. Der Katalysator wird vorzugsweise in Mengen von 0,1 -10 % bezogen auf das Gewicht des Polysilazans eingesetzt.

Geeignete Katalysatoren sind N-heterozyklische Verbindungen, wie 1-Methylpiperazin, 1-Methylpiperidin, 4,4'-Trimethylendipiperidin, 4,4'-Trimethylenbis-(1-methylpiperidin), Diazobizyklo-(2,2,2)oktan, cis-2,6-Dimethylpiperazin.

Weitere geeignete Katalysatoren sind Mono-, Di- und Trialkylamine wie Methylamin, Dimethylamin, Trimethylamin, Phenylamin, Diphenylamin und Triphenylamin, DBU (1,8-Diazabizyklo(4,5,0)-7-undecen), DBN (1,5-Diazabizyklo(4,3,0)-5-nonen), 1,5,9-Triazazyklododekan und 1,4,7-Triazazyklononan.

Weitere geeignete Katalysatoren sind organische und anorganische Säuren wie Essigsäure, Propionsäure, Buttersäure, Valeriansäure, Maleinsäure, Stearinsäure, Salzsäure, Salpetersäure, Schwefelsäure, Phosphorsäure, Chlorsäure und hypochlorige Säure.

Weitere geeignete Katalysatoren sind Metallcarboxylate der allgemeinen Formel (RCOO)ₙM von gesättigten und ungesättigten, aliphatischen oder alizyklischen C₁-C₂₂ Carbonsäuren und Metallionen wie Ni, Ti, Pt, Rh, Co, Fe, Ru, Os, Pd, Ir, und Al; n ist die Ladung des Metallions.

Weitere geeignete Katalysatoren sind Acetylacetonat-Komplexe von Metallionen wie Ni, Pt, Pd, Al und Rh.

Weitere geeignete Katalysatoren sind Metallpulver wie Au, Ag, Pd oder Ni mit einer Partikelgröße von 20 bis 500 nm.

Weitere geeignete Katalysatoren sind Peroxide wie Wasserstoffperoxid, Metallchloride und metallorganische Verbindungen wie Ferrocene und Zirconocene.

Das Lösemittel ermöglicht die Herstellung von Lösungen des Polysilazans und des Katalysators mit einer ausreichend langen Lagerzeit ohne Bildung von Silanen, Wasserstoff oder Ammoniak. Geeignete Lösemittel sind aromatische, zyklische und aliphatische Kohlenwasserstoffe, halogenierte Kohlenwasserstoffe und Ether.

Geeignete Lösemittel sind beispielsweise aliphatische, aromatische und zyklische Kohlenwasserstoffe und Dibutylether.

Mit der beschriebenen Polysilazanlösung lässt sich eine große Auswahl an Substratoberflächen beschichten. Geeignete Substrate sind
■ Metalle, wie z.B. Eisen, Edelstahl, Zink, Aluminium, Nickel, Kupfer, Magnesium, und deren Legierungen, Silber und Gold,
■ Kunststoffe, wie z.B. Polymethylmethacrylat, Polyurethan, Polycarbonat, Polyester wie Polyethylenterephthalat, Polyimide, Polyamide, Epoxy-Harze, ABS-Kunststoff, Polyethylen, Polypropylen, Polyoxymethylen,
■ poröse mineralische Materialien, wie Beton, Tonziegel, Marmor, Basalt, Asphalt, Lehm, Terrakotta
■ Lackoberflächen wie z.B. Kunststoffdispersionsfarben, Acryllacke, Epoxylacke, Melaminharze, Polyurethanharze und Alkydlacke und
■ organische Materialien, wie Holz, Leder, Pergament, Papier und Textilien.

Zur Verfahrensbeschleunigung kann in einer bevorzugten Ausführungsform die Polysilazanlösung mit einer wässrigen Tensidlösung aufgebracht werden. Bevorzugte Tenside sind Alkansulfonate, Betaine, Alkylethoxylate und Ethersulfate. Die Tensidlösung enthält vorzugsweise 0,1 - 5 % Tenside und wird auf die mit Polysilazan beschichtete Oberfläche aufgebracht, entweder durch Tauchen oder durch Wischen oder Sprühen.

Durch die Reaktion von perfluoralkylgruppenhaltigen Verbindungen mit der im ersten Schritt des Verfahrens erhaltenen Oberfläche gelingt eine Hydrophob- und Oleophobausrüstung mit Easy-to-Clean-Eigenschaften. Der Kontaktwinkel von destilliertem Wasser erreicht dann Werte von >90°, insbesondere > 110°. perfluoralkylgruppenhaltige Verbindungen sind beispielsweise C₆F₁₃₋Alkylethyltriethoxysilan, C₈F₁₇-Alkylethyltriethoxysilan, C₁₀F₂₁₋Alkylethyltriethoxysilan und C₁₂F₂₅-Alkylethyltriethoxysilan und die entsprechenden Methoxy-, Propoxy-, Butoxy- und Methoxyethoxy-, Methoxydiethoxy- und Methoxytriethoxyverbindungen und fluorhaltigen Kondensate sein.

Damit werden permanente "Easy-to-clean-Effekte" auch auf bislang nicht in dieser Weise ausrüstbaren Untergründen leicht verfügbar. Vorteilhaft ist auch die Möglichkeit, mit Hilfe der Polysilazan-Beschichtung stark saugende und poröse Untergründe zu versiegeln.

Als Lösungsmittel eignen sich Mono- und Polyalkylenglykoldialkylether (Glymes) oder Mischungen aus Mono- und Polyalkylenglykoldialkylethern mit aliphatischen, zyklischen und aromatischen Kohlenwasserstoffen.

Die Molekülmassenbestimmung des Polysilazans erfolgt für die Zwecke dieser Erfindung mittels Dampfdruckosmometrie.

### Beispiele

Beispiele für die Zusammensetzung geeigneter Polysilazanlösungen werden im folgenden gegeben (Angaben in Gew.-%):
Lösung 1
   20 % Polysilazan mit einem mittleren Molekulargewicht von 2000 g/mol
   0,8 % 4,4'-Trimethylenbis-(1-methylpiperidin)
   79,2 % Xylol '
Lösung 2
   5 % Polysilazan mit einem mittleren Molekulargewicht von 2000 g/mol
   0,2 % 4,4'-Trimethylenbis-(1-methylpiperidin)
   19,8 % Xylol
   75 % Kohlenwasserstoffgemisch, aromatenhaltig (® Pagasol AN 45 von ExxonMobil)
Lösung 3
   1 % Polysilazan mit einem mittleren Molekulargewicht von 2000 g/mol
   0,04 % 4,4'-Trimethylenbis-(1-methylpiperidin)
   3,96 % Xylol
   95 % Kohlenwasserstoffgemisch, aromatenhaltig (® Pagasol AN 45 von ExxonMobil)
Lösung 4
   5 % Polysilazan mit einem mittleren Molekulargewicht von 2000 g/mol
   0,2 % 4,4'-Trimethylenbis-(1-methylpiperidin)
   19,2 % Xylol
   75 % Kohlenwasserstoffgemisch, aromatenhaltig (® Varsol 40 von ExxonMobil)
Lösung 5
   1 % Polysilazan mit einem mittleren Molekulargewicht von 2000 g/mol
   0,04 % 4,4'-Trimethylenbis-(1-methylpiperidin)
   3,96 % Xylol
   95 % Kohlenwasserstoffgemisch, aromatenhaltig (® Varsol 40 von ExxonMobil)
Lösung 6
   5 % Polysilazan mit einem mittleren Molekulargewicht von 2000 g/mol
   0,2 % 4,4'-Trimethylenbis-(1-methylpiperidin)
   19,8% Xylol
   75 % Dipropylenglykoldimethylether
Lösung 7
   1 % Polysilazan mit einem mittleren Molekulargewicht von 2000 g/mol
   0,04 % 4,4'-Trimethylenbis-(1-methylpiperidin)
   3,96 % Xylol
   95 % Dipropylenglykoldimethylether
Lösung 8
   5 % Polysilazan mit einem mittleren Molekulargewicht von 2000 g/mol
   0,2 % 4,4'-Trimethylenbis-(1-methylpiperidin)
   19,8 % Xylol
   20 % Dipropylenglykoldimethylether
   55 % Kohlenwasserstoffgemisch, aromatenarm (Exxsol D 40 von ExxonMobil)
Lösung 9
   1 % Polysilazan mit einem mittleren Molekulargewicht von 2000 g/mol
   0,04 % 4,4'-Trimethylenbis-(1-methylpiperidin)
   3,96 % Xylol
   20 % Dipropylenglykoldimethylether
   75 % Kohlenwasserstoffgemisch, aromatenarm (Exxsol D 40 von ExxonMobil)
Lösung 10
   0,2 % Polysilazan mit einem mittleren Molekulargewicht von 2000 g/mol
   0,008 % 4,4'-Trimethylenbis-(1-methylpiperidin)
   0,792 % Xylol
   20 % Dipropylenglykoldimethylether
   79 % Kohlenwasserstoffgemisch, aromatenarm (Exxsol D 40 von ExxonMobil)
Die folgenden Beispiele sollen die Verwendung einer Polysilazanlösung zur grundierenden Beschichtung und das anschließende Aufbringen von fluorhaltigen Komponenten näher beschreiben.

### Beispiel 1: "Easy-to-clean-Beschichtung" von Stahlblech

Ein Blech aus rostfreiem Stahl wurde mit einer 1 %igen Polysilazanlösung (Lösung 3) beschichtet, wobei etwa 8 ml/m² der Lösung auf der Oberfläche mit einem Viskosevliestuch gleichmäßig verteilt werden, bis das Lösemittel verdampft ist. Der Auftrag mit der Polysilazanlösung wurde einmal wiederholt. Anschließend wurde das mit Polysilazan beschichtete Stahlblech mit einer wässrigen Lösung eines fluorhaltigen Kondensates beschichtet (® Nano-E2C 200 von Fa. Nanogate, Saarbrücken). Der Auftrag betrug 8 ml/m² und erfolgte gleichmäßig durch manuelle Verteilung mit einem Viskosevliestuch. Zur Kondensation des fluorhaltigen Kondensates wird was Stahlblech bei 260°C für 1 Stunde ausgehärtet. Der Kontaktwinkel von destilliertem Wasser betrug vor dem Beschichten 74° und nach dem Beschichten 110°.

In einem zweiten Versuch wurde das mit Polysilazan beschichtete Stahlblech mit einer wässrigen Tensidlösung behandelt. Der Wetting Promotor, der zu Herstellung der wässrigen Tensidlösung verwendet wird, hatte die folgende Zusammensetzung:

| | |
|---|---|
| ® Hostapur SAS 30 | 28 % |
| ® Genagen CA 050 | 3,6 % |
| ® Genapol UD 080 | 5 % |
| Propylenglykol | 3 % |
| Natriumbenzoat | 0,3 % |
| Zitronensäure | zur Einstellung von pH 6 |
| Entmineral. Wasser | Rest |

2 ml/l des Wetting Promotors wurden zur Herstellung der Tensidlösung in Wasser gelöst. Die Tensidlösung wurde auf das mit Polysilazan beschichtete Stahlblech aufgetragen, anschließend mit entmineralisiertem Wasser gespült und getrocknet. Auf das trockene Stahlblech wurde die Lösung des fluorhaltigen Kondensates in Isopropanol aufgetragen (® Nano-E2C 110 von Fa. Nanogate, Saarbrücken), wobei zweimal 8 ml/m² gleichmäßig mit einem Viskosevliestuch auf der Oberfläche verteilt wurden bis das Isopropanol verdunstet war. Das fluorhaltige Kondensat härtete bei Raumtemperatur aus und wurde permanent auf dem Stahlblech gebunden. Der Kontaktwinkel von destilliertem Wasser betrug nach dem Beschichten 109°.

### Beispiel 2: "Easy-to-clean-Beschichtung" von Zinkblechen

Ein Zinkblech wurde wie in Beispiel 1 beschrieben zweimal mit einer 1 %igen Lösung Polysilazan (Lösung 3) manuell beschichtet. Anschließend wurden zweimal 8 ml/m² des fluorhaltigen Kondensates in Isopropanol (® Nano-E2C 110 von Fa. Nanogate, Saarbrücken) aufgetragen und bei Raumtemperatur ausgehärtet. Die hydrophobe und oleophobe Beschichtung konnte permanent auf dem Zinkblech gebunden werden. Der Kontaktwinkel von destilliertem Wasser betrug vor dem Beschichten mit Polysilazan 63° und nach dem Beschichten mit dem fluorhaltigen Kondensat 108°.

### Beispiel 3: "Easy-to-clean-Beschichtung" von Polycarbonat-Kunststoffplatten

2 mm dicke Platten aus Polycarbonat wurden zweimal mit einer 1 %igen Polysilazanlösung (Lösung 3) beschichtet. Dazu wurden 8 ml/m² mit einem Viskosevliestuch verteilt bis das Lösemittel verdunstete. Anschließend wurde zweimal mit 8 ml/m² des fluorhaltigen Kondensates in Isopropanol beschichtet (® Nano-E2C 110 von Fa. Nanogate, Saarbrücken). Der Auftrag erfolgte ebenfalls mit einem Viskosevliestuch bis das Isopropanol verdunstete. Die Härtung erfolgte bei Raumtemperatur. Der Kontaktwinkel von destilliertem Wasser betrug vor dem Beschichten mit Polysilazan 76° und nach der Beschichtung mit dem fluorhaltigen. Kondensat 115°.

### Beispiel 4: "Easy-to-clean-Beschichtung" von Polyethylenterephthalat

PET-Folie wurde zweimal mit einer 1 %igen Polysilazanlösung (Lösung 3) beschichtet. Dazu wurden 8 ml/m² mit einem Viskosevliestuch verteilt bis das Lösemittel verdunstete. Anschließend wurde zweimal mit 8 ml/m² des fluorhaltigen Kondensates in Isopropanol beschichtet (® Nano-E2C 110 von Fa. Nanogate, Saarbrücken). Der Auftrag erfolgte ebenfalls mit einem Viskosevliestuch bis das Isopropanol verdunstete. Die Härtung erfolgte bei Raumtemperatur. Der Kontaktwinkel von destilliertem Wasser betrug vor dem Beschichten mit Polysilazan 17° und nach der Beschichtung mit dem fluorhaltigen Kondensat 115°.

### Beispiel 5: "Easy-to-clean-Beschichtung" von Automobillacken

Ein Automobillack wurde zweimal mit einer 1 %igen Polysilazanlösung (Lösung 3) beschichtet. Dazu wurden jeweils 8 ml/m² mit einem Viskosevliestuch verteilt bis das Lösemittel verdunstete. Anschließend wurden zweimal 8 ml/m² des fluorhaltigen Kondensates in Isopropanol aufgetragen (® Nano-E2C 110 von Fa. Nanogate, Saarbrücken). Der Auftrag erfolgte mit einem Viskosevliestuch bis das Isopropanol verdunstete. Nach der Beschichtung ist die Oberfläche deutlich hydrophob. Wassertropfen perlen rasch ab.

### Beispiel 6: "Easy-to-clean-Beschichtung" von Messing

Ein Messingblech wurde zweimal mit einer 1 %igen Polysilazanlösung (Lösung 3) beschichtet. Der Verbrauch betrug pro Beschichtungsschritt 8 ml/m². Nach 10 Minuten wurde die Polysilazanschicht mit einer wässrigen Tensidlösung aus Beispiel 1 behandelt und zu Siliziumdioxid umgewandelt. Anschließend wurden zweimal 8 ml/m² des fluorhaltigen Kondensates in Isopropanol (® Nano-E2C 110 von Fa. Nanogate, Saarbrücken) aufgetragen. Der Kontaktwinkel von destilliertem Wasser betrug vor der Polysilazanbeschichtung 78°. Nach der Beschichtung mit dem fluorhaltigen Kondensat betrug der Kontaktwinkel 115°.

In einer anderen Variante erfolgte die Hydrophob- und Oleophobierung mit einer Fluorsilanlösung in Isopropanol und Wasser. Dazu wurde folgende Lösung angesetzt:

| | |
|---|---|
| 2 % | C₆-Perfluoralkylethyltriethoxysilan |
| 88 % | Isopropanol |
| 0,6 % | Eisessig |
| 9,4 % | entmineralisiertes Wasser |

Das mit Polysilazan beschichtete Messingblech wurde zweimal mit 8 ml/m² dieser Fluorsilanlösung behandelt. Die Lösung wurde manuell gleichmäßig mit einem Viskosevliestuch verteilt, bis die flüchtigen Bestandteile verdunstet sind. Der Kontaktwinkel von destilliertem Wasser betrug nach der Fluorsilanbeschichtung 124°.

### Beispiel 7: "Easy-to-clean-Beschichtung" von Kupferblechen

Ein Kupferblech wurde wie in Beispiel 6 mit Polysilazan beschichtet und zur Umwandlung in Siliziumdioxid mit der wässrigen Tensidlösung aus Beispiel 1 behandelt. Anschließend wurden zweimal 8 ml/m² des fluorhaltigen Kondensates in Isopropanol (® Nano-E2C 110 von Fa. Nanogate, Saarbrücken) aufgetragen. Der Kontaktwinkel von destilliertem Wasser betrug vor der Polysilazanbeschichtung 82°. Nach der Beschichtung mit dem fluorhaltigen Kondensat betrug der Kontaktwinkel 114°. Alternativ zum fluorhaltigen Kondensat wurde die in Beispiel 6 beschriebene Lösung des C₆-Perfluoralkylethyltriethoxysilan in . Isopropanol/Wasser zur Beschichtung verwendet. Nach zweimaligem Auftrag von 8 ml/m² der Fluorsilanlösung wurde ein Kontaktwinkel von destilliertem Wasser von 125° gemessen.

### Beispiel 8: "Easy-to-clean-Beschichtung" von Edelstahlblechen

Ein Edelstahlblech wurde wie in Beispiel 6 mit Polysilazan beschichtet und zur Umwandlung in Siliziumdioxid mit der wässrigen Tensidlösung aus Beispiel 1 behandelt. Anschließend wurden zweimal 8 ml/m² des fluorhaltigen Kondensates in Isopropanol (® Nano-E2C 110 von Fa. Nanogate, Saarbrücken) aufgetragen. Der Kontaktwinkel von destilliertem Wasser betrug vor der Polysilazanbeschichtung 73°. Nach der Beschichtung mit dem fluorhaltigen Kondensat betrug der Kontaktwinkel 108°. Alternativ zum fluorhaltigen Kondensat wurde die in Beispiel 6 beschriebene Lösung des C₆-Perfluoralkylethyltriethoxysilan in Isopropanol/Wasser zur Hydrophob- und Oleophobbeschichtung verwendet. Nach zweimaligem Auftrag von 8 ml/m² der Fluorsilanlösung wurde ein Kontaktwinkel von destilliertem Wasser von 115° gemessen.

### Beispiel 9: "Easy-to-clean-Beschichtung" von Aluminiumblechen

Ein Aluminiumblech wurde wie in Beispiel 6 mit Polysilazan beschichtet und zur Umwandlung in Siliziumdioxid mit der wässrigen Tensidlösung aus Beispiel 1 behandelt. Anschließend wurden zweimal 8 ml/m² des fluorhaltigen Kondensates in Isopropanol (® Nano-E2C 110 von Fa. Nanogate, Saarbrücken) aufgetragen. Der Kontaktwinkel von destilliertem Wasser betrug vor der Polysilazanbeschichtung 78°. Nach der Beschichtung mit dem fluorhaltigen Kondensat betrug der Kontaktwinkel 112°. Alternativ zum fluorhaltigen Kondensat wurde die in Beispiel 6 beschriebene Lösung des C₆-Perfluoralkylethyltriethoxysilan in Isopropanol/Wasser zur Hydrophob- und Oleophobbeschichtung verwendet. Nach zweimaligem Auftrag von 8 ml/m² der Fluorsilanlösung wurde ein Kontaktwinkel von destilliertem Wasser von 120° gemessen.

### Beispiel 10: "Easy-to-clean-Beschichtung" von Polypropylen, melaminharzbeschichtete Spanholzplatte und Laminatboden

Eine Polypropylenplatte, eine melaminharzbeschichtete Spanholzplatte und eine Laminatbodenplatte wurden wie in Beispiel 6 mit Polysilazan beschichtet. Anschließend wurden zweimal 8 ml/m² des fluorhaltigen Kondensates in Isopropanol (® Nano-E2C 110 von Fa. Nanogate, Saarbrücken) aufgetragen. Alternativ zum fluorhaltigen Kondensat wurde die in Beispiel 6 beschriebene Fluorsilanlösung zur Hydrophob- und Oleophobbeschichtung verwendet und zweimal 8 ml/m² aufgetragen. Folgende Kontaktwinkel von destilliertem Wasser wurden gemessen:
Polypropylen
   vor der Polysilazanbeschichtung: 100°
   nach der Beschichtung mit dem fluorhaltigen Kondensat: 112°
   nach der Beschichtung mit der Fluorsilanlösung: 128°
Melaminharz-beschichtete Spanholzplatte
   vor der Polysilazanbeschichtung: 77°
   nach der Beschichtung mit dem fluorhaltigen Kondensat: 127°
   nach der Beschichtung mit der Fluorsilanlösung: 122°
Laminatboden
   vor der Polysilazanbeschichtung: 40°
   nach der Beschichtung mit dem fluorhaltigen Kondensat: 115°
   nach der Beschichtung mit der Fluorsilanlösung: 122°

### Beispiel 11: "Easy-to-clean-Beschichtung" von Polycarbonat-Radkappen

Wie in Beispiel 6 beschrieben wurden Radkappen aus Polycarbonat zweimal mit 8 ml/m² der Polysilazanlösung (Lösung 3) beschichtet und anschließend mit der wässrigen Tensidlösung aus Beispiel 1 behandelt. Dann wurde die Radkappe aus Polycarbonat zweimal mit 8 ml/m² des fluorhaltigen Kondensates in Isopropanol (® Nano-E2C 110 von Fa. Nanogate, Saarbrücken) beschichtet. Alternativ wurden zweimal 8 ml/m² der Fluorsilanlösung aus Beispiel 6 zur Beschichtung verwendet. Der Kontaktwinkel konnte wegen der Krümmung der Radkappe nicht bestimmt werden. Die Oberfläche ist jedoch deutlich hydrophob und Wassertropfen perlten leicht ab.

## Patentansprüche

1. Verwendung einer Polysilazanlösung, die ein Polysilazan der Formel 1 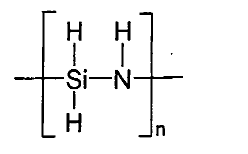 worin n so bemessen ist, dass das Polysilazan ein zahlenmittleres Molekulargewicht von 150 bis 150.000 g/mol aufweist, sowie ein Lösemittel und einen Katalysator enthält, als Grundierung für die Beschichtung einer Oberfläche mit Fluorsilanen oder fluorhaltigen Kondensaten.

2. Verwendung nach Anspruch 1, worin die Polysilazanlösung 0,001 bis 35 Gew.-% des Polysilazans enthält.

3. Verwendung nach Anspruch 1 und/oder 2, worin die Polysilazanlösung 0,00004 bis 3,5 Gew.-% des Katalysators enthält.

4. Verwendung nach einem oder mehreren der Ansprüche 1 bis 3, worin der Katalysator ausgewählt ist aus N-heterozyklischen Verbindungen, Mono-, Di- und Trialkylaminen, organischen und anorganischen Säuren, Metallcarböxylaten der allgemeinen Formel (RCOO)ₙM von gesättigten und ungesättigten, aliphatischen' oder alizyklischen Carbonsäuren mit R = C₁-C₂₂ und Metallionen M mit der Ladung n, Acetylacetonat-Komplexen von Metallionen, Metallpulvern mit einer Partikelgröße von 20 bis 500 nm, Peroxiden, Metallchloriden und metallorganischen Verbindungen.

5. Verwendung nach einem oder mehreren der Ansprüche 1 bis 4, worin das Lösemittel ausgewählt ist aus aromatischen, zyklischen und aliphatischen Kohlenwasserstoffen, halogenierte Kohlenwasserstoffen und Ethern.

6. Verfahren zur Herstellung einer mit Fluorsilanen oder fluorhaltigen Kondensaten beschichteten Oberfläche, indem man die unbeschichtete Oberfläche in einem ersten Schritt mit einer Zusammensetzung in Kontakt bringt, welche ein Polysilazan der Formel 1, ein Lösemittel und einen Katalysator enthält, und die im ersten Schritt erhaltene Oberfläche dann in einem zweiten Schritt mit Fluorsilanen oder fluorhaltigen Kondensaten in Kontakt bringt.

7. Verfahren nach Anspruch 6, worin die perfluoralkylgruppenhaltige Verbindung aus C₆F₁₃-Alkylethyltriethoxysilan, C₈F₁₇-Alkylethyltriethoxysilan, C₁₀F₂₁-Alkylethyltriethoxysilan und C₁₂F₂₅-Alkylethyltriethoxysilan und die entsprechenden Methoxy-, Propoxy-, Butoxy- und Methoxyethoxy-, Methoxydiethoxy- und Methoxytriethoxyverbindungen ausgewählt ist.

8. Beschichtete Oberfläche, erhältlich durch das Verfahren gemäß Anspruch 6 und/oder 7.

## Claims

1. The use of a polysilazane solution which comprises a polysilazane of the formula 1 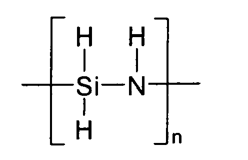 where n has been adjusted so that the polysilazane has a number-average molar mass of from 150 to 150 000 g/mol, and also comprises a solvent and a catalyst, as a primer for the coating of a surface with fluorosilanes or with fluorine-containing condensates.

2. The use as claimed in claim 1, in which the polysilazane solution comprises from 0.001 to 35% by weight of the polysilazane.

3. The use as claimed in claim 1 and/or 2, in which the polysilazane solution comprises from 0.00004 to 3.5% by weight of the catalyst.

4. The use as claimed in one or more of claims 1 to 3, in which the catalyst has been selected from N-heterocyclic compounds, mono-, di-, and trialkylamines, organic and inorganic acids, metal carboxylates of the formula (RCOO)ₙM of saturated or unsaturated, aliphatic or alicyclic carboxylic acids where R = C₁-C₂₂, and metal ions M with charge n, acetylacetonate complexes of metal ions, metal powders with a particle size of from 20 to 500 nm, peroxides, metal chlorides, and organometallic compounds.

5. The use as claimed in one or more of claims 1 to 4, in which the solvent has been selected from aromatic, cyclic, and aliphatic hydrocarbons, halogenated hydrocarbons, and ethers.

6. A process for producing a surface coated with fluorosilanes or with fluorine-containing condensates, by, in a first step, bringing the uncoated surface into contact with a composition which comprises a polysilazane of the formula 1 and comprises a solvent and a catalyst, and then, in a second step, bringing the surface obtained in the first step in contact with fluorosilanes or with fluorine-containing condensates.

7. The process as claimed in claim 6, in which the perfluoroalkyl-containing compound has been selected from C₆F₁₃-alkylethyltriethoxysilane, C₈F₁₇-alkylethyltriethoxysilane, C₁₀F₂₁-alkylethyltriethoxysilane, and C₁₂F₂₅-alkylethyltriethoxysilane, and the corresponding methoxy, propoxy, butoxy and methoxyethoxy, methoxydiethoxy and methoxytriethoxy compounds.

8. A coated surface obtainable by the process as claimed in claim 6 and/or 7.

## Revendications

1. Utilisation, en tant que couche de fond pour le revêtement d'une surface par des fluorosilanes ou des produits de condensation fluorés, d'une solution de polysilazane qui contient un polysilazane de formule 1 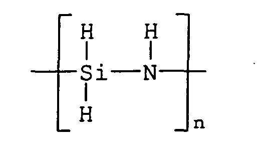 dans laquelle n est tel que le polysilazane présente une masse moléculaire moyenne en nombre de 150 à 150 000 g/mole, ainsi qu'un solvant et un catalyseur.

2. Utilisation selon la revendication 1, pour laquelle la solution de polysilazane contient 0,001 à 35 % en poids du polysilazane.

3. Utilisation selon la revendication 1 et/ou 2, pour laquelle la solution de polysilazane contient 0,00004 à 3,5 % en poids du catalyseur.

4. Utilisation selon l'une ou plusieurs des revendications 1 à 3, pour laquelle le catalyseur est choisi parmi les composés N-hétérocycliques, les mono-, di- et trialkylamines, les acides organiques et inorganiques, les carboxylates métalliques de formule générale (RCOO)ₘM d'acides carboxyliques saturés et insaturés, aliphatiques ou alicycliques, avec R = C₁-C₂₂ et d'ions métalliques M portant la charge n, les complexes acétylacétonate d'ions métalliques, les poudres métalliques ayant une granulométrie de 20 à 500 nm, les peroxydes, les chlorures métalliques et les composés organométalliques.

5. Utilisation selon l'une ou plusieurs des revendications 1 à 4, pour laquelle le solvant est choisi parmi les hydrocarbures aromatiques, cycliques et aliphatiques, les hydrocarbures halogénés et les éthers.

6. Procédé de fabrication d'une surface revêtue de fluorosilanes ou de produits de condensation fluorés, dans lequel, dans une première étape, on met en contact la surface non revêtue avec une composition qui contient un polysilazane de formule 1, un solvant et un catalyseur, et, dans une deuxième étape, on met ensuite en contact la surface obtenue dans la première étape avec des fluorosilanes ou des produits de condensation fluorés.

7. Procédé selon la revendication 6, dans lequel le composé perfluoralkylé est choisi parmi les C₆F₁₃-alkyléthyltriéthoxysilanes, les C₈F₁₇-alkyléthyltriéthoxysilanes, les C₁₀F₂₁-alkyléthyltriéthoxysilanes et les C₁₂F₂₅-alkyléthyltriéthoxysilanes et les composés méthoxy, propoxy, butoxy, méthoxyéthoxy, méthoxydiéthoxy et méthoxytriéthoxy correspondants.

8. Surface revêtue pouvant être obtenue par le procédé selon la revendication 6 et/ou 7.
